# EUROPEAN PATENT APPLICATION

(11) **EP 1 923 801 A1**
(43) Date of publication of application: **21.05.2008**
(21) Application number: 07120921.7
(22) Date of filing: 16.11.2007
(51) Int. Cl.: G06F 17/30, G06F 21/00

(54) **Improved web application auditing based on sub-application identification**

(30) Priority: 17.11.2006 US 560929
(71) Applicant: Hewlett-Packard Development Company, L.P., Houston, TX 77070 (US)
(72) Inventor: Caleb, Sima, Alpharetta, GA 30004 (US); Hoffman, William, Alpharetta, GA 30004 (US)
(74) Representative: Lloyd, Richard Graham

(57) **Abstract**

A web application is more efficiently analyzed by identifying the sub-applications used to generate the various web pages available at the web application and then limiting the vulnerability assessment to just a subset of the web pages generated by each sub-application. The sub-applications can be identified by detecting similarity between the web pages, based on the user interface presentation, the inputs required or allowed, or both. For the user interface presentation, the markup language used to generate the user interface is reduced to common markup language elements by removing content, attribute values and white space and then determining the edit distances between the various pages. Small edit distance values indicate similarity and thus, likely generated by a common sub-application.

## Description

### CROSS-REFERENCE TO RELATED APPLICATIONS

This application is related to and incorporates by reference, the United States Patent Application entitled WEB APPLICATION ASSESSMENT BASED ON INTELLIGENT GENERATION OF ATTACK STRINGS, filed on November 17, 2006, assigned serial number _/__,___ and identified by attorney docket number 19006.1080 and the United States Patent Application entitled CHARACTERIZATION OF WEB APPLICATION INPUTS, filed on November 17, 2006, assigned serial number _/__,___ and identified by attorney docket number 19006.1090 both of which are commonly assigned to the same entity.

### BACKGROUND OF THE INVENTION

The present invention relates to the field of web site vulnerability analysis and, more specifically, to a web site analysis tool that can reduce web site auditing processing time.

Even the most dedicated and fervent worker, from time to time encounters one of those tasks that just seem to be formidable. Some when faced with such a task may simply throw up their hands in surrender. Others, the go-to persons that you know you can always rely on, although maybe feeling equally exasperated, at least realize that even the most formidable task can only be tackled by first starting the task, and then taking one step at a time. However, in some situations, such wisdom just simply cannot be applied. For instance, if one were tasked with the responsibility of counting the number of stars in the Milky Way Galaxy, it is easy to see that to finish this task, you have to start counting and the task can easily be completed by counting one star at a time. But, astronomers predict that our Milky Way Galaxy includes 400 billion stars (plus or minus 200 billion). Assuming the best case scenario of 200 billion stars, if you were to count one star every half of a second, it would take you over 3000 years to count the stars (assuming you do not take time off to sleep and you work weekends). Thus, applying brute force reasoning to accomplish this task simply will not produce results. However, the task can still be accomplished by the application of finesse, or by simply reducing the size of the task by taking it on in a smarter manner. For instance, one could categorize sections of the Milky Way Galaxy as having particular star densities relative to each other. Then the starts in one small region of the galaxy can be counted. This count can then be applied in a multiplicative fashion, weighted by the various densities, to arrive at an estimated count.

What does all this astronomy have to do with auditing of web sites? Not so much other than to point out that the larger and more encompassing a task becomes, the more creativity that needs to be applied in effort to solve the problem or complete the task in a reasonable, and efficient manner. It seems as though every time we make a technological advancement in memory storage devices, such as increasing the capacity or decreasing the size), the world quickly converges upon it and rapidly consumes the memory. This is especially true in the world of Internet accessible web sites and web applications. As memory capacities increase, web sites grow in sophistication, complexity and size. A good portion of it is being consumed by increasingly sophisticated and complex web sights. The typical 1-2 Megabyte web site of yesterday is being replaced by huge, intricate and detailed web sites full of web applications, data stores, information and the like.

The free exchange of information facilitated by personal computers surfing over the Internet has spawned a variety of risks for the organizations that host that information and likewise, for those who own the information. This threat is most prevalent in interactive applications hosted on the World Wide Web and accessible by almost any personal computer located anywhere in the world. Web applications can take many forms: an informational Web site, an intranet, an extranet, an e-commerce Web site, an exchange, a search engine, a transaction engine, or an e-business. These applications are typically linked to computer systems that contain weaknesses that can pose risks to a company. Weaknesses can exist in system architecture, system configuration, application design, implementation configuration, and operations. The risks include the possibility of incorrect calculations, damaged hardware and software, data accessed by unauthorized users, data theft or loss, misuse of the system, and disrupted business operations.

As the digital enterprise embraces the benefits of e-business, the use of Web-based technology will continue to grow. Corporations today use the Web as a way to manage their customer relationships, enhance their supply chain operations, expand into new markets, and deploy new products and services to customers and employees. However, successfully implementing the powerful benefits of Web-based technologies can be greatly impeded without a consistent approach to Web application security.

It may surprise industry outsiders to learn that hackers routinely attack almost every commercial Web site, from large consumer e-commerce sites and portals to government agencies such as NASA and the CIA. In the past, the majority of security breaches occurred at the network layer of corporate systems. Today, however, hackers are manipulating Web applications inside the corporate firewall, enabling them to access and sabotage corporate and customer data. Given even a tiny hole in a company's Web-application code, an experienced intruder armed with only a Web browser (and a little determination) can break into most commercial Web sites.

The problem is much greater than industry watchdogs realize. Many U.S. businesses do not even monitor online activities at the Web application level. This lack of security permits even attempted attacks to go unnoticed. It puts the company in a reactive security posture, in which nothing gets fixed until after the situation occurs. Reactive security could mean sacrificing sensitive data as a catalyst for policy change.

A new level of security breach has begun to occur through continuously open Internet ports (port 80 for general Web traffic and port 443 for encrypted traffic). Because these ports are open to all incoming Internet traffic from the outside, they are gateways through which hackers can access secure files and proprietary corporate and customer data. While rogue hackers make the news, there exists a much more likely threat in the form of online theft, terrorism, and espionage.

Today the hackers are one step ahead of the enterprise. While corporations rush to develop their security policies and implement even a basic security foundation, the professional hacker continues to find new ways to attack. Most hackers are using "out-of-the-box" security holes to gain escalated privileges or execute commands on a company's server. Simply incorrectly configuring off-the-shelf Web applications leave gaping security vulnerabilities in an unsuspecting company's Web site.

Passwords, SSL and data-encryption, firewalls, and standard scanning programs may not be enough. Passwords can be cracked. Most encryption protects only data transmission; however, the majority of Web application data is stored in a readable form. Firewalls have openings. Scanning programs generally check networks for known vulnerabilities on standard servers and applications, not proprietary applications and custom Web pages and scripts.

Programmers typically don't develop Web applications with security in mind. What's more, most companies continue to outsource the majority of their Web site or Web application development using third-party development resources. Whether these development groups are individuals or consultancies, the fact is that most programmers are focused on the "feature and function" side of the development plan and assume that security is embedded into the coding practices. However, these third-party development resources typically do not have even core security expertise. They also have certain objectives, such as rapid development schedules, that do not lend themselves to the security scrutiny required to implement a "safe solution."

Manipulating a Web application is simple. It is often relatively easy for a hacker to find and change hidden form fields that indicate a product price. Using a similar technique, a hacker can also change the parameters of a Common Gateway Interface (CGI) script to search for a password file instead of a product price. If some components of a Web application are not integrated and configured correctly, such as search functionality, the site could be subject to buffer-overflow attacks that could grant a hacker access to administrative pages. Today's Web-application coding practices largely ignore some of the most basic security measures required to keep a company and its data safe from unauthorized access.

Developers and security professionals must be able to detect holes in both standard and proprietary applications. They can then evaluate the severity of the security holes and propose prioritized solutions, enabling an organization to protect existing applications and implement new software quickly. A typical process involves evaluating all applications on Web-connected devices, examining each line of application logic for existing and potential security vulnerabilities.

A Web application attack typically involves five phases: port scans for default pages, information gathering about server type and application logic, systematic testing of application functions, planning the attack, and launching the attack. The results of the attack could be lost data, content manipulation, or even theft and loss of customers.

A hacker can employ numerous techniques to exploit a Web application. Some examples include parameter manipulation, forced parameters, cookie tampering, common file queries, use of known exploits, directory enumeration, Web server testing, link traversal, path truncation, session hijacking, hidden Web paths, Java applet reverse engineering, backup checking, extension checking, parameter passing, cross-site scripting, and SQL injection.

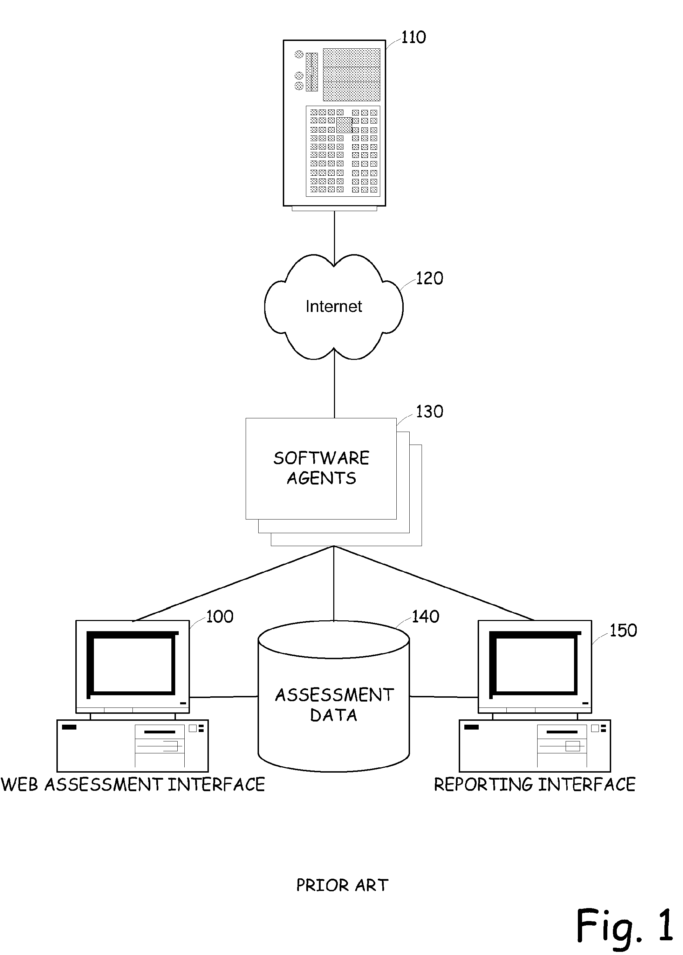

Assessment tools provide a detailed analysis of Web application and site vulnerabilities. FIG. 1 is a system diagram of a typical structure for an assessment tool. Through the Web Assessment Interface 100, the user designates which application, site or Web service resident on a web server or destination system 110 available over network 120 to analyze. The user selects the type of assessment, which policy to use, enters the URL, and then starts the process.

The assessment tool uses software agents 130 to conduct the vulnerability assessment. The software agents 130 are composed of sophisticated sets of heuristics that enable the tool to apply intelligent application-level vulnerability checks and to accurately identify security issues while minimizing false positives. The tool begins the crawl phase of the application using software agents to dynamically catalog all areas. As these agents complete their assessment, findings are reported back to the main security engine through assessment database 140 so that the results can be analyzed. The tool then enters an audit phase by launching other software agents that evaluate the gathered information and apply attack algorithms to determine the presence and severity of vulnerabilities. The tool then correlates the results and presents them in an easy to understand format to the reporting interface 150.

However, Web sites that extend beyond the rudimentary level of complexity that simply includes HTML to be rendered by a browser, can include a variety of sophisticated elements such as JAVA code, applets, Web applications, etc. The traditional approach of crawling through the HTML of a Web site is limited in the amount of information that can be obtained and analyzed. For instance, a Web site may include a PDF file that includes, within the text of the PDF file, additional links. The traditional Web crawler technology may obtain the link to the PDF file during the crawling phase of the attack, but the links embedded within the PDF file would be ignored during the second phase of the attack.

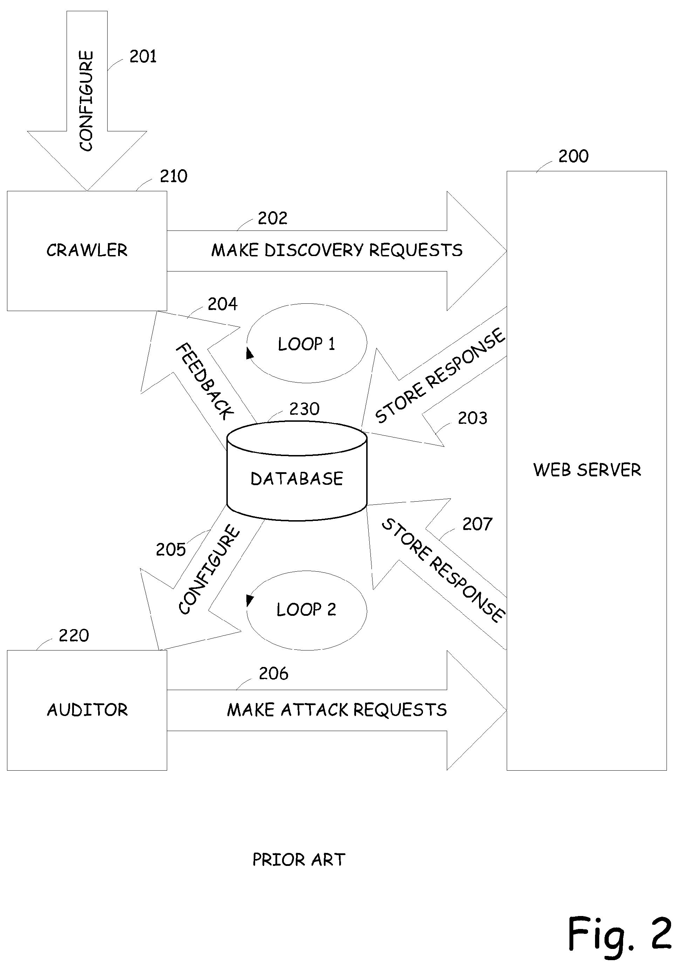

FIG. 2 is a block diagram showing the flow of operations for a prior art system that conducts a two-phased vulnerability assessment including a crawling phase and an auditing phase. Initially, a crawler 210 is configured 201 to initiate the crawling phase of the assessment. Once configured, the crawler 210 begins making discovery requests 202 to the web server 200. Each request results in a response 203 which is then stored into database 230. Feedback 204 may be provided to the crawler 210 to further configure or augment the operation of the crawler 210. Thus, the crawling phase consists of multiple trips through the process identified as Loop 1 which consists of multiple sessions, where each session includes a discovery request 202 followed by a response 203 and possible feedback 204.

Once the crawling phase is completed, the auditing phase commences. During the auditing phase, the auditor 220 is configured 205 based on data stored in database 230 during the crawling phase. The auditor 220 then makes attack requests 206 against the web server 200. Each attack request results in obtaining a response 207 which is then stored into the database 230. Thus, the auditing phase consists of one or more trips through the process identified as Loop 2 which consists of one or more sessions, where each session includes an attack request 206 followed by a response 207 and further configuration 205 as necessary.

The crawling process can be quite intensive and, if a recursive crawl is implemented, the amount of data accumulated during the discovery and response sessions can be quite large. In addition, once that data is obtained from the crawl, the auditing process must then use this information to conduct yet another intensive task. Thus, as memory capacities increase and as web sites become more and more complex, the task of providing an assessment of the security aspects of these web sites looks more and more like the task of counting the stars in the Milky Way. Today's assessment tools are lacking in the application of clever technology to help reduce the burden of conducting a security assessment analysis of a large complex web site.

Thus, there is a need in the art for web site and web applications assessment tool that can tackle the ever increasing complexities of analyzing web sites and web applications in a manner that is accurate, but that is quicker and more efficient than today's technology. The present invention as described herein provides such a solution.

### BRIEF SUMMARY OF THE INVENTION

The present invention includes limiting the scope of a vulnerability assessment, at least for a parameter based audit, by identifying groups of web pages based on the sub-application used to generate them and then, conducting the audit on only a subset of the web pages in each grouping. Advantageously, this enables the vulnerability assessment to identify vulnerabilities in the backend processes or sub-applications without having to conduct a brute force analysis on every generated page.

In one embodiment of the present invention, the markup language pages generated by a web application are identified, such as through the use of a crawler. The web pages are then grouped based on the sub-application used to generate the web pages. This grouping can be performed based on the user interface structure of the web page, the inputs accepted by the web page or a combination of both. The grouping is formed based on the similarity of these aspects between the web pages.

For a comparison and grouping based on the user interface structure, one embodiment of the invention operates to convert the web pages to strings and then uses an edit distance algorithm to determine the edit distance between the various web pages and thus, the similarity of the web pages. Similar web pages are concluded as having been generated by the same sub-application(s) and thus, only a subset of the web pages from each grouping need to be assessed.

The conversion of the web pages to strings can be accomplished in a variety of manners. In one embodiment of the present invention, this task is accomplished by stripping the web pages of their content, removing the attribute values from the markup language tags, placing the attributes within a tag in an order (such as based on their alphabetic characteristics) and then removing the white space.

Once the string representations are available, the edit distance algorithm can easily identify the edit distance between them and thus, identify the similarities. Another aspect of the present invention is that sub-applications that are heavily relied on for a web application will be identified by having a larger number of web pages included in their groupings. As such, the assessment may prioritize its operation to first look at the more heavily relied upon sub-applications.

Another aspect of the present invention is to probe the inputs of a web application to determine the characteristics of the inputs and then to group the inputs based on these characteristics. The aspect of the present invention takes advantage of the fact that a web server generally uses a common set of routines for processing various types of inputs. By characterizing the inputs, the backend processes that process the inputs can be tested by simply testing a few members of each group of inputs. In addition, characterizing the inputs of the web application can be used to reduce false positives. Further details regarding techniques to identify the characteristics of the web application inputs is provided in the referenced patent application entitled CHARACTERIZATION OF WEB APPLICATION INPUTS.

In another embodiment, the web pages can be further divided into sub-web pages or web page zones based on the functionality and user interface structure of the zones. Thus, a single web page may include several zones that are generated by one or more back end processes or sub-applications. If the web pages generated by the web application have commonality in the presentation of particular zones, then the zones can be grouped similar to the web page groupings and analyzed accordingly. As an example, a particular web application may provide news stories, weather reports and stock assessments. Although each of these pages may be drastically different and use many different sub-applications, each page may also utilize a common sub-application that operates to generate an RSS registration zone. As such, this zone would only need to be tested for a subset of the pages that include that particular zone.

### BRIEF DESCRIPTION OF THE SEVERAL VIEWS OF THE DRAWING

FIG. 1 is a system diagram of a typical structure for an assessment tool.

FIG. 2 is a block diagram showing the flow of operations for a prior art system that conducts a two-phased vulnerability assessment including a crawling phase and an auditing phase.

FIG. 3 is a flowchart diagram illustrating the steps of phases involved in a general embodiment of the present invention.

FIGS. 4A-4C is a series of a typical section of the mark-up language used to generate a portion of a web page.

FIG. 5 is a chart further illustrating the operation of this algorithm.

### DETAILED DESCRIPTION OF THE INVENTION

The present invention decreases the amount of processing time required to perform an audit of web applications by limiting the audit to focus on sub-applications within the web application that are used to create the content, rather than attempting to audit the entire web application. More specifically, a web application is actually a collection of multiple sub-applications that are invoked at various times during a session with a web application and that generate the rendered content to a user. For example, a web application may include one or more of the following sub-applications as non-limiting examples: site search engine, story serving/templating system, email alert system, survey form system, company stock profile system, feedback forms, contact by email, content presentation application, download engine, or the like. Rather than auditing the parameters of every page of a web application, the present invention operates to identify the sub-applications within a web application, and then to only audit on the sub-application level by auditing one or just a sampling of a few pages generated by each sub-application. Because the vulnerabilities or errors in a web application are generally confined to the sub-applications rather than the data and the resulting pages that are generated by the sub-applications, the present invention advantageously can greatly reduce the processing overhead required to fully assess the vulnerabilities of a web application.

One aspect of the present invention includes a technique for identifying the sub-applications within a web application. In one embodiment of the invention, this is accomplished by grouping pages into sub-applications based on their structure. Once this is accomplished, the auditing process can be limited to a random sample of each grouping. Advantageously, this enables a web application to be assessed for vulnerabilities while greatly reducing the number of requests for parameter-based audits.

For example, websites such as MSNBC, CNN, ABC can consist of hundreds of thousands of pages. Typical web application assessment tools will attempt to crawl each of these pages and then to conduct an audit of each page. Depending on the sophistication of the crawling technology, the sophistication of the auditing technology, the number of audits or attacks performed, etc., it can be appreciated that the task of providing a full assessment of such a large web application can become an extensively time consuming task. However, using an embodiment of the present invention, the number of sub-applications operating to generate the hundreds of thousands of pages can be identified by grouping the various web pages generated by the application and then auditing only a sampling of pages from each grouping. Thus, for a website including 200,000 web pages generated through 10 sub-applications, the auditing task can easily be reduced. For instance, in the most streamlined approach, a single page from each grouping can be audited to reduce the task to simply 10 pages rather than 200,000; however, more realistically, the audit will be performed on a sampling of several pages from each grouping.

As a more specific example, the news story pages presented on CNN include several items that are consistent across the pages. These items include a sign-in area, an email alert function, an RSS subscription function and a PODCAST function. Because these items are all driven by the same sub application, it is not necessary to audit these parameters on every single page presented by www.cnn.com. Rather, embodiments of the present invention operate to identify each sub-application, such as the email alert sub-application, the login sub-application, etc., and then audit only a few instance of that sub-application. Similarly, if each of the story pages presented on the CNN website are SQL injectable, then it is clear that all of the new stories are SQL injectable because they are all retrieved, generated and templated by the same sub-application. Thus, the present invention takes advantage of the fact that it is the underlying sub-application that is or is not vulnerable to attacks, and focuses the audit on the sub-application level rather than taking the vast amount of processing time to audit each and every page.

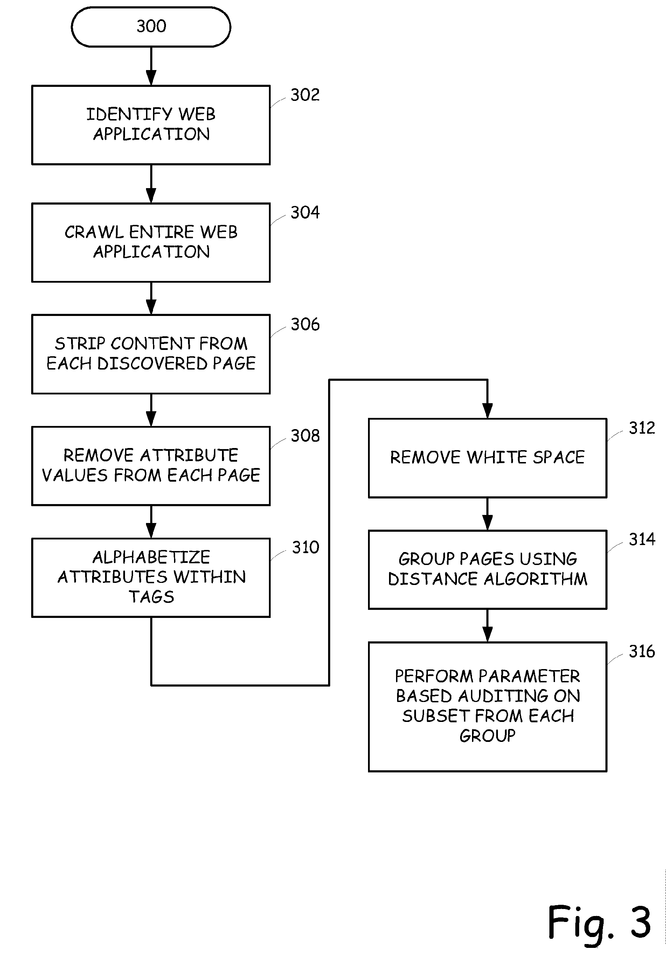

FIG. 3 is a flowchart diagram illustrating the steps of phases involved in a general embodiment of the present invention. At step 302 a web application to be assessed is identified. This is usually accomplished by either visiting the URL or entering the URL into the assessment tool. Once the web application is identified, a complete crawl of the web application is conducted to identify all of the accessible pages 304. Various embodiments may utilize different crawling engines and the present invention is not limited to any particular crawling engine. Furthermore, the present invention is applicable regardless of the efficiency and thoroughness of the crawling engine. In fact, the present invention advantageously can provide equal performance regardless of the sophistication of the crawling technology. For instance, if the crawler is a single pass crawler, the crawler may potentially miss a large number of pages. However, if the crawler identifies multiple pages generated by each sub-application, the effectiveness of the parameter based auditing function of the present invention will not be diluted.

Once the crawling process is completed, the pages are converted or transformed into a format suitable for grouping them based on their structure. This aspect of the present invention takes advantage of the similarity between the structure of web pages that are generated by the same sub-application. For example, news stories will generally have a title, followed by an author's byline, followed by some paragraph tags with an iframe for the image gallery. This structure is notably different from the structure that is used for a company stock profile page which will include a title, a graph, a table of earnings, and links to the company's homepage. Again, these pages will be structurally different from the pages that result from exercising a search engine to create a search engine results page. The search engine results pages will include an input box, a drop down box, a submit button, an unordered list of links and a previous and next button. Likewise, an email contacts link will generate a page with a completed to address, a box to accept a from address and message area to receive the message content. Each of these page types is very different and the transformation process is used to place the pages into a format that facilitates grouping them based on their structure.

Thus, this aspect of the present invention operates to detect sub-applications by defining the sub-applications based on the interface they present to the user. As an example, the interfaces presented to a user for a survey application, an email alerts system, an RSS subscription, a search engine and a story serving interface will all be quite different. Each such service requires different inputs from the user and presents the results in different manners. In one embodiment of the present invention, this distinct set of inputs and/or outputs is what is used to distinguish or identify the different sub-applications.

One embodiment of the transformation process or aspect of the present invention includes first stripping the content from each page 306 leaving the pages with only the attributes and attribute values within the tags. Next the attribute values are removed from each page 308 leaving only the attributes. The attributes within each tag are then rearranged in alphabetical order 310 and the white space between each attribute and tag is removed 312 to create a greatly reduced string. A distance algorithm is then employed to determine the relative difference distance between each page 314. The pages are then grouped based on their similarity, or lack of distance realizing that the pages generated by the same sub-application will have minimal distance. Finally, a parameter based auditing function is performed on a subset of the pages from each group to determine if the sub-applications have any vulnerabilities.

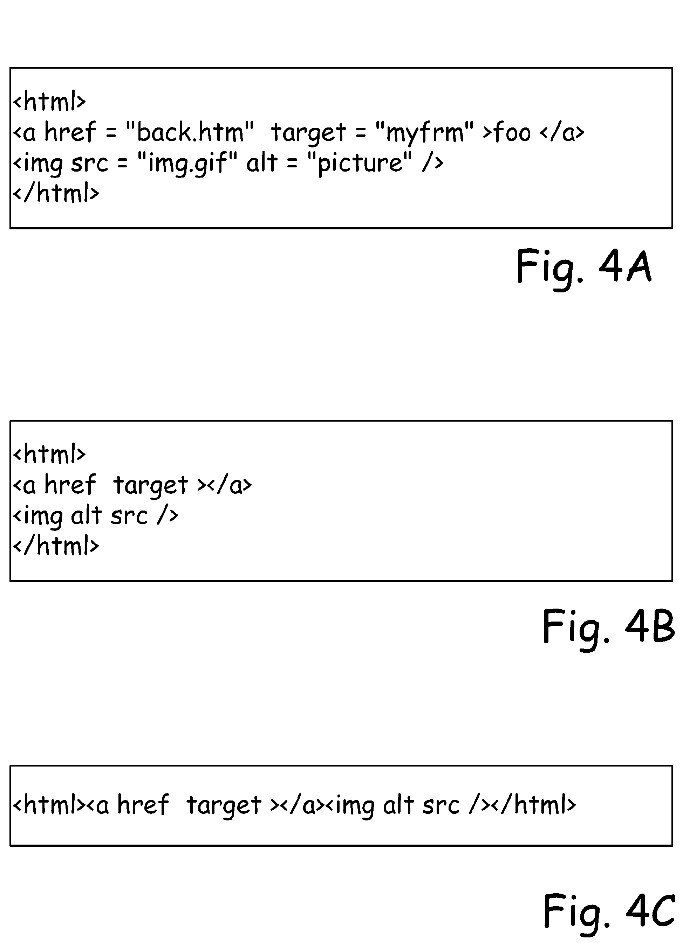

FIGS. 4A-4C is a series of a typical section of the mark-up language used to generate a portion of a web page. The series illustrates one embodiment of the transformation of a web page to a format more suitable for identifying web page groupings. As previously mentioned, pages created by the same sub-application tend to have the same or very similar structure. The present invention provides a technique to quantify this structure in such a manner that similar pages can be grouped together. In one embodiment of this aspect of the present invention, the pages or HTML page is reduced to a string of symbols and then a string distance algorithm is used to calculate how similar two pages are to each other.

FIG. 4A is a section of the mark-up language used to generate a portion of a web page prior to any transformations taking place. FIG. 4B is the same section of the mark-up language displayed in FIG. 4A after the application of the several steps in the transformation process. The first step, as described in FIG. 3 is stripping the content from each of the discovered pages 306. The next step is to remove the attribute values 308 and then order the attributes inside the tag into alphabetical order 310. These steps result in producing the html content as shown in FIG. 4B. The white space is then removed from the html content to result in the creation of a single string of symbols 312 as illustrated in FIG 4C.

Once pages identified in the crawl have been reduced or transformed into the desired format - a string in the illustrated example - the various pages are grouped based on their similarity. In an exemplary embodiment, this step is performed using a well know string distance algorithm to calculate the similarity between two pages. Those skilled in the art will be familiar with algorithms and techniques used to determine the distance between two strings as well as specific algorithms to determine the edit distance as used in an exemplary embodiment of the present invention. One such algorithm is the Levenshtein Distance Algorithm which is further described at the URL of http://en/wikipedia.org/wiki/Levenshtein_distance. The Levenshtein distance or edit distance is defined as the number of editing operations it would take to transform one string into an exact match of the other string. The available operations for this transformation include (a) insertion, (b) deletion and (c) substitution. An example given by the afore mentioned reference is the distance between the words "kitten" and "sitting" which is calculated to be 3 as follows:

kitten becomes sitten with the substitution of 'k' for 's';

sitten becomes sittin with the substitution of'e' for 'i'; and

sittin becomes sitting with the insertion of 'g' at the end.

FIG. 1 is a system diagram of a typical structure for an assessment tool. FIG. 2 is a block diagram showing the flow of operations for a prior art system that conducts a two-phased vulnerability assessment including a crawling phase and an auditing phase.

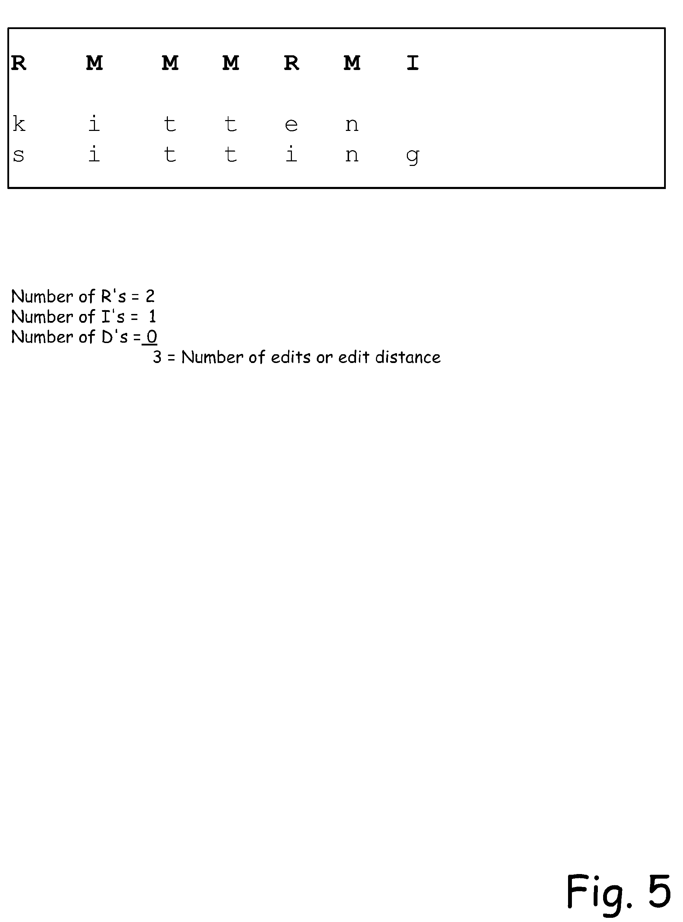

FIG. 3 is a flowchart diagram illustrating the steps of phases involved in a general embodiment of the present invention. FIGS. 4A-4C is a series of a typical section of the mark-up language used to generate a portion of a web page. FIG. 5 is a chart further illustrating the operation of this algorithm. In FIG. 5, the top line shows the operation that is performed with an insertion being represented by an I, a deletion being represented by a D, a substitution or replacement being represented by an R and where the letters match each other, the letter M is provided. In the illustrated example, the distance is a three because two letters must be replaced (k for s and e for i) and one letter must be inserted (g). The Levenshtein distance algorithm is similar to determining the Hamming distance between two strings with the added characteristic that the strings are not required to be the same length, and hence the insertion operation is included.

Thus, in the presently described embodiment of the present invention, similar pages are determined by computing the edit distance between the transformed pages using a distance algorithm. The edit distance is the number of transformations required to convert string A into string B with a transformation being defined in a Levenshtein embodiment, as insertions, deletions and substitutions. The fewer transformations that are required to convert one string into a match with another string, the more similar the strings are. In the web application environment, the crawling procedure results in finding N pages. Thus, a matrix dimensioned N x N can be populated to represent the distances between all of the pages. For instance, the intersection of a row and a column provide the edit distance between the two pages represented by that row and column number. To group pages, a threshold distance can be selected and for each row, pages identified by the columns intersecting that row that have a distance of less than or equal to the threshold distance may be considered to be in the same group - or generated from the same sub-application. In a typical embodiment, the threshold distance may be on the order of 3-5.

Furthermore, because the distance algorithm creates a value that has a communicable property (i.e. the distance between string A and string B is the same as the distance between string B and string A or dist(A,B) = dist(B,A)), the N x N matrix can actually be reduced to a table having (N*(N-1))/2 entries. In other words, the pages only have to be compared to each other once rather than each time a pair appears in the matrix. This property reduces the amount of memory and processing power that is necessary to compute the string distances between all of the crawled pages.

Another aspect of the present invention is to reduce the number of transforms needed by defining the character or symbol set to be applied. For instance, each tag is considered to be a single letter or symbol. Thus, the tag <P> is a single symbol and as such, if it is necessary to add a <P> tag, this is only one transform rather than three. This feature is available because the above-described transformation process advantageously reduces the string to pure HTML and thus, there is a controlled alphabet. As another example, the symbol <IMG SRC> as a single letter can be substituted with <IMG ALT SRC> as a single transform. Advantageously, this aspect of the present invention reduces the number of characters that must be compared and reduces the number of steps required to calculate the distance between strings.

After the pages have been grouped, then a parameter based auditing can be performed on a subset of the pages from each group 316. Thus, the present invention can be used to identify the sub-applications with a web application by conducting a crawl to identify all of the bases within a web site and then transforming each page into a reduced character set string that can be compared to other pages to identify an editing distance. Pages that have a minimal editing distance, such as zero or a threshold amount are grouped together and considered to have been created by a common sub-application. A subset of these pages is then audited and as such, the sub-applications for the web application are tested for vulnerabilities without having to conduct a complete brute force auditing of every page.

It should also be appreciated that rather than looking at the html to make a grouping determination, the actual look and feel of the layout presentation of a web page may also be analyzed to identify groupings and thus, sub-applications. This can be accomplished by analyzing the various structures and zones of the web page based on framing characteristics, data type, etc. Thus, the general presentation of web page can be divided into zones based on text, figures, links, advertisements, etc. and then the various web pages can be compared to identify similarity in structures. It should also be appreciated that rather then analyzing the html code, the actual video components of the screen can be analyzed. In addition or in the alternative, the web pages can be compared and grouped based on the identification of the inputs that are accepted by the web page. Thus, the web pages can be analyzed and grouped based on how they are presented to the user (i.e. their structure) and how they interact with a user (i.e., inputs). Other characteristics of the web pages may also be used in identifying groupings of the web pages and the present application is not limited to the employment of any particular technique, although some of the techniques disclosed herein may in and of themselves be considered as novel.

Another aspect of the present invention is that further intelligence regarding the web application can be obtained by analyzing the results of the edit distance comparisons. For instance, if a web application generates on the order of 1 million pages and 400,000 of these web pages are grouped or depend on one single backend process, then that particular sub-application should be focused on the most. This is due to the fact that if that sub-application has a vulnerability, the vulnerability is more widely exposed. As such, the vulnerability assessment tool may focus on these pages first.

Another aspect of the present invention is to further analyze the various groupings to determine how the groups relate to each other. For instance, a relation between the web pages in one group may have a one-way or a two-way relationship with the web pages from another group. This information can be further used in determining which backend modules are used to generate the content of the web page. For instance, a web page may include several areas or zones with a separate backend module or sub-application feeding the content of each zone or being invoked by actions taken in relationship to the zones. Another aspect of the present invention is that the knowledge discovered about the sub-applications can be graphically displayed for ease of analysis. For instance, having obtained the knowledge of what sub-applications exist in the web application enables the data representing this knowledge to be graphed out to show how one sub-application in the web application can talk to another sub-application in the web application. Advantageously, this allows for the determination of the flow of how a web application works. For instance, how a data transfer or transformation can occur on one page displayed by a web application and then also appear on one or more additional pages.

It should be appreciated that the embodiments and specific examples provided in this description are provided as non-limiting examples and as such, even though they may individually be considered as novel, should not be construed as the only novel implementations or configurations of the present invention. The described embodiments comprise different features, not all of which are required in all embodiments of the invention. Some embodiments of the present invention utilize only some of the features or possible combinations of the features. Variations of embodiments of the present invention that are described and embodiments of the present invention comprising different combinations of features noted in the described embodiments will occur to persons of the art. The scope of the invention is limited only by the following claims.

## Claims

1. A method for conducting a parameter based audit of a web application, the method comprising the steps of:
identifying a plurality of markup language web pages generated by the web application;
grouping web pages created by a common sub-application within the web application; and
conducting the parameter based audit on a subset of the web pages in each group.

2. The method of claim 1, wherein the step of identifying a plurality of web pages comprises the step of conducting a crawl.

3. The method of claim 1, wherein the step of grouping web pages created by a common sub-application within the web application further comprises the steps of:
converting each of the plurality of web pages into a predetermined format;
executing an algorithm that operates to compare web pages in the predetermined format to identify a similarity factor; and
grouping the web pages based on the similarity factor.

4. The method of claim 3, wherein the predetermined format is a string and, the step of converting each of the plurality of web pages into a predetermined format further comprises the steps of:
removing the content from the web pages; and
removing the attribute values within the tags.

5. The method of claim 4, wherein the step of converting each of the plurality of web pages into a predetermined format further comprises the step of placing the attributes within a tag into a predefined order.

6. The method of claim 5, wherein the step of converting each of the plurality of web pages into a predetermined format further comprises the step of removing the white space between the tags.

7. The method of claim 6, wherein the algorithm operates to calculate the edit distance and the similarity factor is the edit distance.

8. The method of claim 7, wherein the step of grouping the web pages based on the similarity factor further comprises grouping web pages that have an edit distance less than a threshold value.

9. The method of claim 8, wherein the algorithm operates on a predefined set of symbols that may include one or more characters and make up distinct markup language elements.

10. The method of claim 1, wherein the step of grouping web pages created by a common sub-application within the web application comprises grouping the web pages based on the interface presented to the users.

11. The method of claim 1, wherein the step of grouping web pages created by a common sub-application within the web application comprises grouping the web pages based on the inputs accepted by the web pages.

12. A method for conducting a parameter based audit of a web application, the method comprising the steps of:
converting a plurality of web pages generated by the web application into strings by:
removing the content from a plurality of web pages;
removing the attribute values within the markup language tags;
placing the attributes within the tags in a predefined order;
removing white space between the tags;
determining the similarity between the plurality of web pages by:
calculating the edit distance between each pair of web pages;
grouping web pages with an edit distance below a threshold value; and
conducting the parameter based audit on a subset of the web pages in each group.

13. The method of claim 12, wherein the step of calculating the distance between each pair of web pages comprises counting the number of deletions, insertions and substitutions required to convert one web page into the other web page.

14. The method of claim 12, wherein a symbol domain consisting of valid markup language elements is used as the alphabet for the web pages and the step of calculating the distance between each pair of web pages comprises counting the number of deletions, insertions, and substitutions of the symbols in the alphabet required to convert one web page into the other web page.

15. The method of claim 12, wherein the step of placing the attributes within the tags in a predefined order is alphabetically based.

16. A method for conducting a parameter based audit of a web application, the method comprising the steps of:
identifying a plurality of web pages generated by the web application;
converting the plurality of web pages into strings;
determining the similarity between the plurality of web pages by calculating the edit distance between each pair of web pages;
grouping web pages with an edit distance below a threshold value; and
conducting the parameter based audit on a subset of the web pages in each group.

17. The method of claim 16, wherein the step of converting the plurality of web pages into strings further comprises the steps of:
removing the content from a plurality of web pages;
removing the attribute values within the markup language tags;
placing the attributes within the tags in a predefined order; and
removing white space between the tags.

18. The method of claim 17, further comprising the step of determining the similarity between the plurality of web pages based on the inputs accepted.

19. The method of claim 16, wherein the step of identifying a plurality of web pages comprises the step of performing a crawl of the web site.

20. The method of claim 16, wherein the step of conducting the parameter based audit on a subset of the web pages in each group further comprises prioritizing the audit based on the number of web pages in each group.
